# EUROPÄISCHE PATENTANMELDUNG

(11) **EP 1 086 928 A2**
(43) Veröffentlichungstag der Anmeldung: **28.03.2001**
(21) Anmeldenummer: 00119730.0
(22) Anmeldetag: 09.09.2000
(51) Int. Cl.: C01C 3/02

(54) **Verwendung von keramischen Netzen**

(30) Priorität: 27.09.1999 DE 19946261
(71) Anmelder: W.C. Heraeus GmbH & Co. KG, 63450 Hanau (DE)
(72) Erfinder: Gorywoda, Marek, Dr., 63452 Hanau (DE); Lund, Jonathan, 65779 Kelkheim (DE)
(74) Vertreter: Kühn, Hans-Christian

(57) **Zusammenfassung**

Es wird u. a. die Verwendung von keramischen Netzen als Beabstandung von Katalysatornetzen voneinander bei der HCN-Herstellung, insbesondere nach dem Andrussov-Verfahren, bereitgestellt.

## Beschreibung

Die Erfindung betrifft eine Verwendung von keramischen Netzen bei der Herstellung von HCN, insbesondere nach dem Andrussov-Verfahren sowie die Verwendung von gebrauchten Katalysatornetzen.

Es ist allgemein bekannt, dass bei vielen heterogenen Katalysereaktionen im Laufe der Zeit die entsprechend eingesetzten metallischen Katalysatoren, insbesondere in Form von Katalysatornetzen, sich miteinander verbinden ( 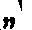 verschweißen") und damit ein Anstieg des Druckverlustes an den Netzen und eine Verringerung der Produktionsrate bis zum eventuellen Verstopfen des Reaktors einhergehen.

Aus DE-AS 13 01 805 wird offenbart, bei der Herstellung von HCN als Träger für Katalysatornetze beispielsweise einen wabenförmig ausgebildeten keramischen Träger aus Aluminiumoxid einzusetzen. Dieser keramische Träger stützt jedoch ein ganzes Paket aus Katalysatornetzen. Der keramische Träger ist dadurch gekennzeichnet, dass er aus einer oberen, horizontal angeordneten, wabenförmig ausgebildeten Katalysatorunterlage und einer unmittelbar anschließenden, etwa gleiche Baustärke aufweisenden, als Gasverteilungseinrichtung wirkenden Lage mit vertikalen, im Durchmesser gleichbleibenden Gasdurchlässen, die an der Unterseite auf dem Boden des Reaktionsgefäßes aufliegende Füße und an der Oberseite parallele Rippen aufweist, besteht, wobei die Katalysatorunterlage aus quadratischen Einzelelementen und die Gasverteilungseinrichtung aus quadratischen Einzelblöcken zusammengesetzt sind.

In US 3,215,495 ist ein Verfahren zur Herstellung von HCN aufgezeigt, bei dem eine Reaktionsmischung aus Ammoniak, Sauerstoff und einem Kohlenwasserstoffgas in einem Reaktorbett mit einem Platinmetallnetzkatalysator miteinander reagieren, wobei das Reaktionsgas vom Netzkatalysator durch eine isolierende Schicht aus refraktären Partikeln geleitet wird. US 5,401,483 zeigt u. a. eine Katalysatoreinrichtung mit einer Vielzahl von Drahtnetzen, die voneinander mittels metallischer Netze voneinander beabstandet sein können.

Typischerweise werden bei der HCN-Herstellung nach dem Andrussov-Prozeß Katalysatornetze aus PtRh10 mit einem Drahtdurchmesser von ca. 76 µm eingesetzt. In Abhängigkeit von den Arbeitsbedingungen (Druck, Durchsatz) werden von 6 bis 60 solche Netze in einen Reaktor eingebaut. Die Einsatzdauer beträgt 60 bis 360 Tage. Die Temperatur im Reaktor beträgt 1.050 °C bis 1.150 °C.

Der hauptsächliche Grund für den Ausbau der Katalysatornetze ist, dass ihre katalytische Aktivität allmählich absinkt. Die Aktivität, ausgedrückt als die Umsetzung von NH₃ in HCN, erreicht maximal ca. 65 bis 70 %. Sie sinkt proportional zur Einsatzdauer der Katalysatornetze ab.

Die Katalysatornetze werden aus dem Reaktor ausgebaut, nachdem die Aktivität ein bestimmtes aus wirtschaftlichen Gründen festgelegtes Niveau (beispielsweise ca. 60%) unterschritten hat.

Der hauptsächliche Grund für das Absinken der Aktivität dürfte aus einem Verschweißen (Sintern) der Katalysatornetze bei der hohen Einsatztemperatur resultieren. Durch das Verschweißen der Katalysatornetze ändert sich ihre Porosität, was zu einer Verkürzung der Verweilzeit der reagierenden Gase, zum Anstieg der Druckverluste, zur Verringerung der Produktionsrate und zu einer Gefahrenerhöhung bezüglich einer Kohlenstoffabscheidung führt.

Ein anderer Grund für das Absinken der Aktivität liegt darin, dass sich bei einigen in der Praxis vorkommenden Verhältnissen von NH₃, Luft und CH₄ und/oder durch die Verschweißung der Netze sukzessive Kohlenstoffatome an den Katalysatornetzen ausscheiden. Die Kohlenstoffatome verringern die katalytische Wirksamkeit der Katalysatornetze, so dass sie schließlich aus dem Reaktor ausgebaut werden müssen. Erfahrungsgemäß scheidet sich Kohlenstoff fast vollständig an den ersten Katalysatornetzen ab (ca. die Hälfte der Netze).

Hinzu kommt, dass die Aktivierungsperiode von neuen Katalysatornetzen beim Andrussov-Prozess einen relativ langen Zeitraum in Anspruch nimmt. Erfahrungsgemäß erreichen neue Katalysatornetze erst nach ungefähr 3 bis 5 Tagen ihre volle katalytische Aktivität. Dieser Zustand wird dadurch erklärt, dass sich die Oberfläche der Drähte in den Katalysatornetzen erst umbilden muss bevor ihre volle Aktivität erreicht wird. Die Oberfläche der Drähte verändert sich unter den Reaktionsbedingungen, indem sie sich zu einer facettenartigen, sehr feinen Struktur umbildet. Diese Struktur besitzt eine sehr hohe Oberfläche und ist verantwortlich für die Aktivität der Netze.

Aus dem vorgenannten ergibt sich das Problem, mit Hilfe von neuartigen Verwendungen und eines Verfahrens zur Herstellung von HCN die oben genannten Nachteile zumindest teilweise zu beseitigen.

Dieses Problem wird erfindungsgemäß durch Verwendungen nach den Ansprüchen 1 und 4 gelöst.

Erfindungsgemäß wird die Verwendung von keramischen Netzen als Beabstandung von Katalysatornetzen voneinander bei der HCN-Herstellung beansprucht. Bei der HCN-Herstellung nach dem Andrussov-Prozeß wird aufgrund des keramischen Charakters der Trenn-Netze und ihrer beabstandenden Funktion ein Verschweißen der Katalysatornetze untereinander verhindert. Die Charakteristik der Katalysatornetze wird dadurch nicht verändert, die Porosität bleibt weitgehend konstant, es finden keine Druckverluste statt, so dass die Produktionsrate auf gleichhohem Niveau gehalten werden kann und schließlich darüber hinaus die Gefahr einer Kohlenstoffabscheidung an den Katalysatornetzen quasi ausscheidet.

Die Verhinderung der Verschweißung der Katalysatornetze beim Andrussov-Prozeß bietet noch den Vorteil, dass:

Beim Ausscheiden von Kohlenstoff an den ersten Netzen können diese von den sauberen Netzen getrennt und durch neue ersetzt werden. Es hat sich in vorteilhafter Weise bewährt, dass die keramischen Netze vorwiegend aus Al₂O₃ und SiO₂ bestehen, wobei auch weitere Zusätze, insbesondere B₂O₃ (SiO₂ -Gehalt von 0 bis 30 Gew.-%, B₂O₃ -Gehalt von 0 bis 15 Gew.-%), denkbar sind.

Solche keramischen Netze können aus keramischen Fäden gewebt, gewirkt oder gestrickt werden. Die einzelnen Fäden selbst bestehen zweckmäßigerweise aus zusammengelegten, gesponnenen oder verdrehten Fasern. Die einzelnen Fasern haben eine Dicke von ca. 5 bis 20 µm. Die Fäden können unterschiedliche Dicken aufweisen. Vorteilhaft sind Durchmesser von 0,3 bis 0,8 mm. Die Netze selbst sollten eine Porosität (offene Fläche) zwischen 10 bis 70 % aufweisen. Diese Porosität ist wichtig, damit die keramischen Netze praktisch keinen messbaren Widerstand (Druckabfall) beim Durchströmen der Reaktionsgase erzeugen.

Weiterhin wird erfindungsgemäß die (nochmalige) Verwendung von gebrauchten Katalysatornetzen bei Einsatz mehrerer hintereinander geschalteter und mittels keramischer Netze voneinander beabstandeter Katalysatornetze als von Eduktströmen zumindest im wesentlichen zuerst durchströmte Katalysatornetze bei der HCN-Herstellung beansprucht. Auf diese Art und Weise kann die Zahl der neu einzusetzenden Netze und somit Zeit und Kosten eingespart werden. In diesem Zusammenhang ist es möglich, ein solches gebrauchtes Katalysatornetz als 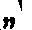 Starter"-Netz, also als ein Netz, das bei Einsatz mehrerer hintereinander geschalteter Katalysatornetze zuerst von den Eduktströmen umströmt wird, zu verwenden. Die unteren, noch sauberen Katalysatornetze haben nach einer gewissen Zeit im Reaktor ihre Drahtoberfläche zum Teil umgebildet. Sie können deshalb nach einem Netztausch 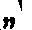 nach vorne" eingebaut werden. Sie brauchen eine kürzere Zeit für eine weitere Oberflächenumbildung, wodurch sich die Aktivierungszeit verkürzt.

Das nachfolgende Beispiel dient zur Erläuterung der Erfindung.

Die Verwendung der keramischen Netze wurde in einem HCN-Reaktor getestet. Dieser HCN-Reaktor wird mit zwölf Katalysatornetzen bestückt. Die Einsatzdauer der Netze beträgt normalerweise 90 Tage. Die Aktivierungsperiode dauert in diesem Reaktor ungefähr 4 Tage. Nach dieser Zeit beträgt die Umsetzungseffizienz von NH₃ zu HCN ca. 68 %. Am Ende der Laufperiode fällt die Effizienz auf ca. 60 % und die Katalysatornetze werden ausgebaut.

Im ersten Test wurden ungefähr 7 x 7 cm große Proben gewebter keramischer Netze hinter das letzte Katalysatornetz in den HCN-Reaktor eingebaut. Die chemische Zusammensetzung der jeweiligen keramischen Netze war verschieden. Getestet wurden die folgenden Zusammensetzungen (in Gew.-%):
1.) Al₂O₃ 62%, SiO₂ 24%, Ba₂O₃ 14%;
2.) Al₂O₃ 70 %, SiO₂ 28 %, Ba₂O₃ 2 %;
3.) Al₂O₃ 85%, SiO₂ 15%;
4.) Al₂O₃ > 99 %.

Der Faden(Garn)-Durchmesser der Proben betrug jeweils ca. 0,45 mm. Die Proben wiesen eine Porosität von ca. 50 % auf.

Nach 90 Tagen im Reaktor wurden die Proben herausgenommen. Alle Proben überstanden den Einsatz im Reaktor ohne Schaden.

Im zweiten Test wurden zwei keramische Netze zwischen die Katalysatornetze so eingebaut, dass Gruppen von jeweils vier Katalysatornetzen voneinander getrennt wurden. Die keramischen Netze wurden gewebt wie die vorherigen Proben im ersten Test.

Es konnte festgestellt werden, dass die Umsetzungseffizienz von NH₃ zu HCN erst nach 115 Tagen auf das Niveau von 60 % abgesunken war. Beim Ausbau des Katalysators ließen sich die Gruppen von Katalysatornetzen und keramischen Netzen leicht voneinander trennen.

Im dritten Test wurden die vier 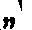 letzten" Katalysatornetze aus dem zweiten Test nach 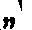 vorne" eingebaut. Anstatt zwölf neue Katalysatornetze wurden nur acht neue verwendet. Die Katalysatornetze wurden, wie im zweiten Test, durch zwei keramische Netze voneinander getrennt. Es wurde festgestellt, dass die volle Umsatzeffizienz von ca. 68 % bereits nach zwei Tagen erreicht wurde.

## Patentansprüche

1. Verwendung von keramischen Netzen als Beabstandung von Katalysatornetzen voneinander bei der HCN-Herstellung.

2. Verwendung nach Anspruch 1, dadurch gekennzeichnet, daß es sich bei der HCN-Herstellung um das Andrussov-Verfahren handelt.

3. Verwendung nach Anspruch 1, dadurch gekennzeichnet, daß die keramischen Netze vorwiegend aus Al₂O₃ und SiO₂ bestehen.

4. Verwendung von gebrauchten Katalysatornetzen bei Einsatz mehrerer hintereinander geschalteter und mittels keramischer Netze voneinander beabstandeter Katalysatornetze als von Eduktströmen zumindest im wesentlichen zuerst durchströmte Katalysatornetze bei der HCN-Herstellung.
